# EUROPEAN PATENT SPECIFICATION

(11) **EP 3 293 005 B1**
(45) Date of publication and mention of the grant of the patent: **16.11.2022**
(21) Application number: 16188398.8
(22) Date of filing: 12.09.2016
(51) Int. Cl.: B28B 3/02, B30B 15/06

(54) **APPARATUS FOR OBTAINING WORK SURFACES FOR THE DECORATION OF CERAMIC SURFACES**
VORRICHTUNG ZUR HERSTELLUNG VON ARBEITSOBERFLÄCHEN ZUR DEKORATION VON KERAMIKOBERFLÄCHEN
APPAREIL DESTINÉ À OBTENIR DES SURFACES DE TRAVAIL POUR LA DÉCORATION DE SURFACES EN CÉRAMIQUE

(43) Date of publication of application: 14.03.2018
(73) Proprietor: Progetto Futuro S.r.l., 41049 Sassuolo (MO) (IT)
(72) Inventor: FERRI, Sauro, 41049 Sassuolo (Modena) (IT)
(74) Representative: Antonucci, Emanuele

(56) References cited:
- EP-A1- 2 572 864
- WO-A1-2015/114433
- DE-A1-102011 051 266
- US-A- 4 903 400
- US-A1- 2005 212 184
- US-B2- 6 295 737

## Description

### TECHNICAL FIELD OF THE INVENTION

The present invention relates to apparatus for obtaining work surfaces for decorating the surfaces of ceramic products in the green state, that is, not yet dried/fired.

More particularly, the present invention relates to an apparatus for obtaining operative surfaces of punches, of punch coverings, or of a flexible element in the form of belt on which to obtain a motif or a relief decoration to be imprinted on ceramic products in the green state.

### PRIOR ART

In the prior art, in the production field of ceramic products such as tiles and the like, it is known to use punches bearing a motif or a decoration in relief or low relief to be printed on the surface of products in the green state.

In general, the punches are pressed against the surface of a ceramic product which is still in what is known as the "green" state (otherwise known as the "raw" state), leaving an impression, one motif or one decoration in relief or low relief on the surface thereof, in such a way that the aforementioned relief or low relief remains imprinted on the malleable surface of the product prior to drying/firing of the latter.

Such operation enables the reproduction, on the surface of the ceramic product, of the same motif in relief or low relief, optionally repeating it, given that the operative surface of the punches intended to be imprinted on the ceramic product cannot be modified during the pressing step.

In case wherein it is desired to produce a motif or decoration with a different relief or low relief, the complete change of the punches or, alternatively the exchange of an external layer of the punch, the so called covering, on which the motif or decoration having the impression to be imprinted is present, is foreseen.

The obtainment of a punch or of the covering to be applied thereto, bearing a specific motif or decoration, is onerous in terms of cost and production time.

For example, for creating a punch, and more precisely the operative surface of the punch, bearing the motif or decoration to be imprinted leaving an impression on the ceramic product, one proceeds initially with definition of the characteristics of the punch or of the covering itself, such as for example the type of material, the surface finish, wear resistance, as well as the geometry of the motif or decoration. Then, one or more prototypes of punches or punch coverings are produced and tested on a production line. Once the evaluation step is over, the next step is the production of the actual punch or punch covering.

Generally, the operative surface in relief or low relief of a punch or a punch covering for ceramic use is obtained by removing material from a plate made, for example, of resin or an elastomer, until the desired motif or decoration in relief or low relief is obtained on the surface of the plate itself.

The prior art comprises patent application EP-2 065 104 A2, which discloses a decorating apparatus comprising an ink-jet printer which delivers inks or enamels intended for decorating ceramic manufactured articles and a conveyor belt which receives the ceramic inks or enamels from the ink-jet printer and deposits them on the ceramic manufactured articles; provision is also made for a method for decorating ceramic manufactured articles comprising a step of delivery of ceramic inks or enamels by means of an ink-jet printer intended for decorating the aforementioned ceramic manufactured articles, a step of distribution of the ceramic inks or enamels on to a conveyor belt, and a step of transfer of the ceramic inks or enamels from the conveyor belt to the ceramic manufactured articles.

Methods for providing textured surfaces on punches or pressing rollers, not directed to the field of ceramic products manufacturing, are known for instance by prior art documents DE 10 2011 051266 A1 and US 4,903,400 A.

Achieving a punch or the covering for a punch for ceramic use can both require long elaboration times and be onerous in economic terms.

The production of a high number of punches or of coverings to be applied thereto can therefore significantly weight on the operating costs of a production line for ceramic products.

A method for manufacturing a press belt for ceramic slabs having a structured surface is disclosed in prior art document WO 2015/114433 A1.

The need to provide methods for creating punches or coverings for punches for decorating the surface of ceramic products in the green state is therefore noted, which methods resolve the drawbacks mentioned above.

### OBJECTS OF THE INVENTION

The principal object of the present invention is to improve the state of the art in the sector of the creation of operative surfaces provided with a motif or decoration in relief or low relief to be imprinted on the malleable surface of ceramic products, for their decoration.

Another object of the present invention is to provide apparatus for creating an operative surface for ceramic use that bears the motif or decoration in relief or low relief to be imprinted on the surface of ceramic products in the green state, which apparatus is alternative to the apparatus of conventional type.

Yet another object of the present invention is to provide an apparatus for creating, in a shorter time, an operative surface bearing a motif or decoration in relief or low relief to be imprinted on ceramic products.

A further object of the present invention is to provide an apparatus for creating an operative surface for ceramic use bearing aesthetic complex or articulated motifs/decorations, without any limitation.

Another object of the present invention is to provide an apparatus for creating an operative surface for ceramic use equipped with a motif or decoration in relief or low relief to be imprinted on ceramic products able to create operative surfaces of reduced or broad dimensions, without any limitation.

According to the present invention, an apparatus for creating operative surfaces for ceramic products, according to the attached claim 1 is provided.

According to one aspect of the present invention, the operative surface bearing a motif or decoration in relief or low relief to be imprinted on the malleable surface of ceramic products is created on the external surface of a punch for ceramic use, or on the external surface of a covering to be applied to a punch for ceramic use, or again, on at least a portion of the surface of a belt of flexible type to be impressed against the surface of ceramic products to be decorated.

The dependent claims refer to preferred and advantageous embodiments of the invention.

### BRIEF DESCRIPTION OF THE DRAWINGS

Further characteristics and advantages of the present invention will become clearer from the detailed description of an example embodiment of apparatus for creating the operative surface bearing at least one motif or decoration in relief or low relief to be imprinted on ceramic products, provided by way of non-limiting example, in the attached tables of drawings, wherein:
figure 1 illustrates schematically a prospective view from above of the main components of an apparatus for creating operative surfaces to be imprinted on ceramic products according to the present invention;
figure 2 is a prospective view from below of a detail of the apparatus for creating operative surfaces as shown in figure 1;
figure 3 is a schematic view in cross-section along the line III-III of a detail of an operative surface created using the apparatus according to the present invention;
figure 4 illustrates schematically a prospective view from above of a further configuration of the apparatus according to the present invention.

In the attached drawings, identical parts or components are identified by the same reference numbers.

### EMBODIMENTS OF THE INVENTION

With reference to the attached figures, it will be noted that apparatus for creating an operative surface bearing motifs/decorations in relief or low relief to be imprinted on the malleable surface of ceramic products in the green state is indicated generally with the reference number 1.

According to one aspect of the invention, the apparatus 1 is configured for creating an operative surface of this type in relief or low relief by means of a process of additive type, as will be better described in the following.

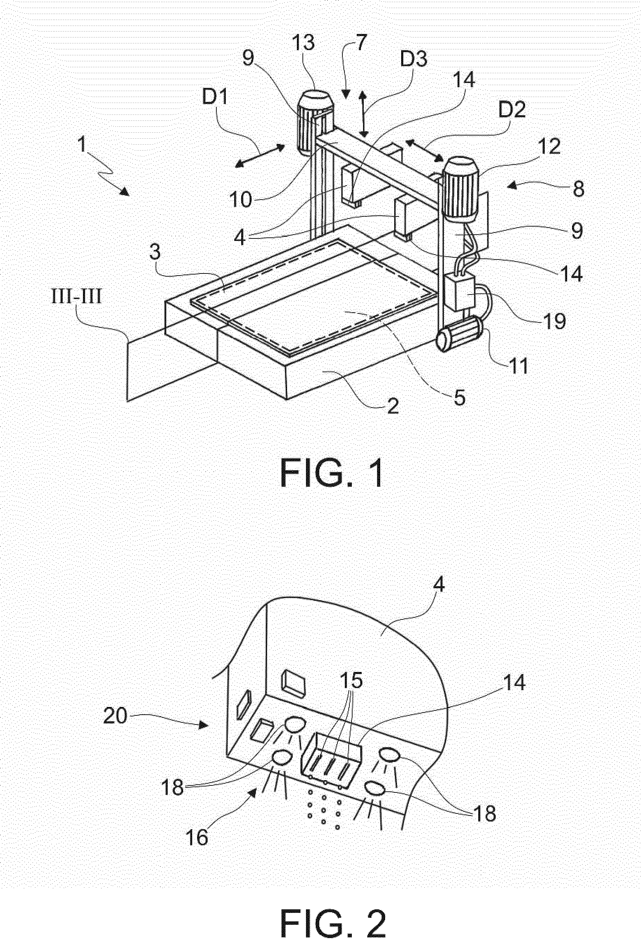

According to one version of the present invention, the operative surface in relief or low relief can be created directly on the surface of a punch provided, in use, to be pressed against the surface of ceramic products to be elaborated (see figure 1).

To this end, the surface of the punch on which the operative surface is to be created may be made in metal or resin or in a material suitable to resist the compression stresses to which it is subjected in use.

According to a further version of the present invention, the operative surface may be created on the surface, external in use, of a covering to be applied to a punch for ceramic use.

According to this version, the covering to be applied on the punch may be made of a flexible material of the type rubber or the like.

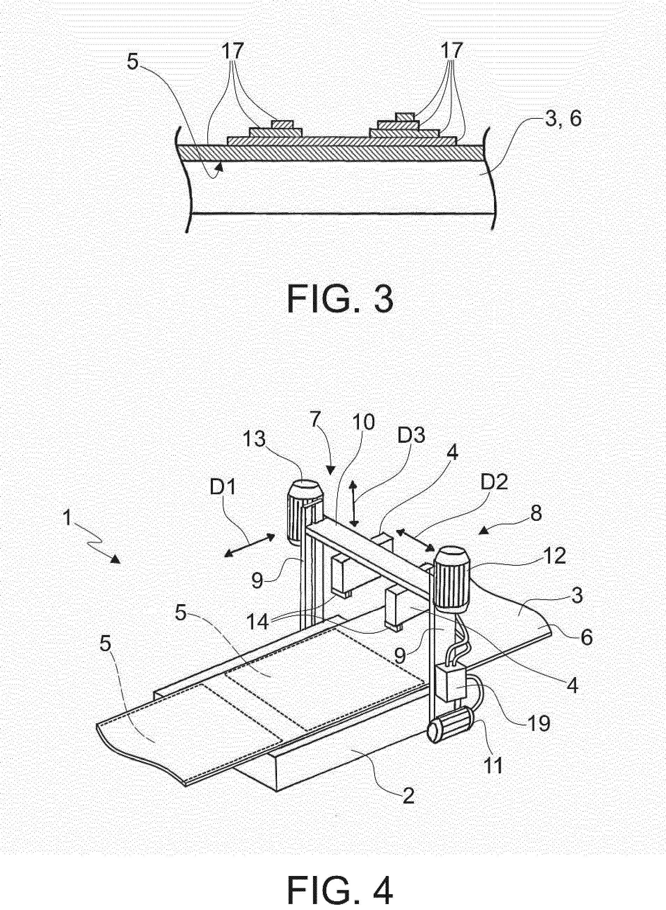

According to a further version of the present invention, the operative surface in relief or low relief may be created on at least a portion of a surface of a flexible type belt, configurable as a ring and provided in use to be pressed against the surface of the products to be worked (see figure 4) in such a way to obtain, on the surface of the ceramic products, a motif or decoration in relief or low relief complementary to that on the flexible ribbon.

It will be observed that such a flexible belt, in use, is intended to be associated with presser means, not illustrated in the drawings, adapted to press the operative surface, created along at least a portion of the said belt, against the surface of the ceramic products to be decorated.

The belt may be made of a material of flexible type, such as an elastomer, plastic in general and optionally comprise synthetic fibres.

In the following, with the expression "operative surface" reference will be made, without distinction, to the surface of a punch, of a punch covering or of a flexible belt configurable as a ring, bearing at least one motif or decoration in relief or low relief to be imprinted on the malleable surface of ceramic products in the green state, in such a way as to obtain, on the surface of the ceramic products, a motif or decoration in relief or low relief complementary to that of the punch, or of the punch covering, or of the flexible belt, etc.

In the following description, the expression creation of the operative surface is intended to indicate the creation of at least one motif or decoration in relief or low relief on the surface of a punch, of a covering to be applied to a punch, or along at least an extent or portion of a flexible belt configurable as a ring and associable with presser means. The apparatus 1 according to the present invention enables rapid prototyping of the motif or decoration along the operative surface to be imprinted on a ceramic product in the green state, thus enabling a reduction in costs and in the time for the tooling a production line.

Furthermore, as will be better described in what follows, apparatus 1 according to the present invention allows creation of any motif or decoration in relief or low relief on the said operative surface within the scope of an effective solution, capable of guaranteeing high production flexibility and low operating costs.

According to one aspect of the present invention, apparatus 1 allows the creation of an operative surface of substantially any dimensions, without any limitation, depending on the dimensions of the ceramic products to be decorated and of specific production requirements.

With reference to the embodiment illustrated in figure 1, the apparatus 1 according to the present invention comprises a basement 2, over which substantially planar decoration means 3 are positioned, on which to create at least one motif or decoration in relief or low relief (figure 3).

In the description that follows, the expression decoration means 3 is intended to indicate a punch or a punch covering or a flexible type belt element having at least one surface on which a motif or a decoration in relief or low relief can be created by means of the present apparatus 1.

In particular, the apparatus 1 is configured for the realization on at least a portion of a surface of the decoration means 3, of at least one motif or decoration in relief or low relief to be imprinted on the malleable surface of ceramic products in the green state. As stated, the decoration means 3 may be a punch for ceramic use, a punch covering for ceramic use, or a flexible belt 6 configurable as a ring and associable with presser means, or a similar element adapted for the purpose.

The apparatus 1 according to the present invention comprises at least one print module configured for the realisation of three-dimensional structures by a process of the additive type on a surface of the decoration means 3.

According to the example of figure 1 two print modules 4 are illustrated, but it must be borne in mind that the number of print modules 4 can be anything starting from one. By means of the at least one print module 4 it is possible to create an operative surface bearing the motif or decoration in the desired relief or low relief, which will be successively imprinted on the ceramic products in the green state, leaving an impression complementary to that of the operative surface 5.

According to one version of the present invention, the operative surface 5 can be realised on the exposed surface of the decoration means 3.

In the attached drawings, the operative surface 5 is represented by a dashed line. According to one version of the present invention, the operative surface 5 can be realised along one or more portions of a flexible type belt 6 (see figure 4), as will be better described in what follows.

According to one version of the present invention, not illustrated in the attached drawings, the apparatus 1 may be without the basement 2 and be associable to means for supporting decoration means 3 on which it is desired to create the motif or decoration in relief or low relief.

The apparatus 1 further comprises a support structure 7, to which the at least one print module 4 is associated.

The apparatus 1 also comprises means for moving 8 for the relative movement of the at least one print module 4 and the decoration means 3.

According to one version of the present invention, the relative position of the at least one print module 4 and the decoration means 3 may be modified along a first direction D1.

According to another version of the present invention, the relative position between the at least one print module 4 and the decoration means 3 may be modified along a second direction D2, transverse to D1.

According to the present invention, the relative distance between the at least one print module 4 and the decoration means 3 may be modified along a vertical direction D3, that is, a direction perpendicular to the operative surface 5.

It should be noted that the direction D3 is substantially orthogonal to the first and second directions D1 and D2.

In the attached figures, the support structure 7 is represented as a portal structure, comprising a pair of columns 9 which rise vertically at the opposing sides of the support structure 7, connected to each another by a horizontal crossbar 10.

According to one version of the present invention, the reciprocal position of the support structure 7 and the decoration means 3 to be worked, may be modified along a first direction D1 (see figure 1).

According to one version of the present invention, the support structure 7 is movable along the first direction D1.

According to another version of the present invention, the decoration means 3 may be associated movable relative to the support structure 7 along the first direction D1.

The at least one print module 4 may be associated slidably relative to the horizontal crossbar 10 and actuated into moving by the means for moving 8 along a second direction, indicated in figure 1 as D2, substantially transverse to the first direction D1. Furthermore, according to the present invention, the at least one module
is associated movable relative to the apparatus 1 along a third, substantially vertical direction D3 (see figure 1).

According to one version of the present invention, the at least one module 4 may be associated with the horizontal crossbar 10. In turn, the horizontal transverse member 10 may be slidably associated with the columns 9.

In this regard, the apparatus 1 may comprise, along the columns 9, guide means, not illustrated in detail in the figures, for sliding the horizontal crossbar 10 along the columns 9, in other words along the third direction D3.

As has already been said, the means for moving 8 may be associated with the at least one print module 4, so as to be able to move it with respect to the support structure 7. Consequently, the position and/or the relative distance of the at least one print module 4 with respect to the exposed upper surface of the decoration means 3, when the latter are positioned lower than the said at least one print module 4, may be modified.

If a basement 2 is provided, the means for moving 8 can be configured for moving the at least one print module 4 with respect to the said basement 2 itself.

According to a further version of the present invention, comprising a basement 2, the means for moving 8 can be configured for moving the latter with respect to the at least one print module 4 along the first direction D1 and/or the second direction D2 and/or the third direction D3.

More in detail, the means for moving 8 comprise first actuation means 11, adapted for movmg the support structure 7, and consequently the at least one print module 4 associated therewith, along the first direction D1.

The means for moving 8 may comprise second actuation means 12 associated with the at least one print module 4, so as to be able to move it along the horizontal crossbar 10, and substantially along a direction transverse to the first direction D 1 (direction D2 illustrated in figure 1).

Possibly, the means for moving 8 may also comprise means 13 for raising the at least one print module 4.

The raising means 13 are configured for moving the at least one print module 4 along the third substantially vertical direction D3, closer to or further away from the decoration means 3.

According to one version of the present invention, the raising means 13 may be associated with the horizontal crossbar 10.

By way of example, the first and second actuation means 11, 12 and the raising means 13 may each comprise a respective electric motor and motor transmission unit, not illustrated in detail in the figures.

As has been said, the means for moving 8 described above are configured for the use in a substantially portal support structure 7.

However, configurations of the means for moving 8 that are different from those described above are possible, depending on the shape of the support structure 7 with which they are associated, without thereby exceeding the scope of protection of the present invention.

By way of example, according to a further version of the present invention not illustrated in the figures, the support structure 7 could comprise one or more anthropomorphic or Cartesian robotic arms with which are associated respectively the print module or modules 4.

The at least one print module 4 comprises at least one fluid-jet print head 14, for the selective delivery of a printing fluid or of a printing fluid mixture through suitable nozzles 15.

In particular, the fluid or fluid mixture are delivered, selectively, on to the exposed upper surface of the decoration means 3, when these latter are in a lower position than the support structure 7 of the apparatus 1.

The apparatus 1 comprises means for hardening the fluid product emitted from the at least one print head 14.

Such hardening means are irradiation means, indicated overall with the number 16, adapted to emit radiation which accelerates hardening or solidification of the fluid or fluid mixture deposited on the upper surface of the decoration means 3.

In practice, the apparatus 1 enables the formation of successive layers 17 of material superimposed on one another, arranged in such a way as to form the motif or decoration in relief or low relief of the operative surface 5 of the decoration means 3(see figure 3). Therefore, the operative surface 5, contrary to the conventional systems, is obtained by means of an additive type process.

The single layers 17 that make up the operative surface 5 along at least a portion of the decoration means 3, after the solidification of the fluid or fluid mixture of which they are composed, are securely adherent to one another and compacted, to withstand the stresses to which they are subject in use, and in particular to compression stresses. Moreover, the single layers 17,in use, are even resistant to any transverse shear stresses. In this way, the operative surface 5 of the decoration means 3 is particularly resistant during the pressing step against the surface of the ceramic products in the green state that is to be printed, even following repeated work cycles.

According to the present invention, the apparatus 1 comprises the irradiation means 16 at the at least one print head 14.

By way of example, figure 2 illustrates one possible version of a print module 4 comprising at least one print head 14 and irradiation means 16 that are arranged on the perimeter around the said at least one print head 14.

According to one version of the present invention, the fluid or fluid mixture delivered through the at least one print head 14 are of the type reacting to ultraviolet radiation and, more precisely, are able to solidify or harden if exposed to UV radiation.

According to this version, the irradiation means 16 comprise UV radiation emitters 18. According to one version of the present invention, the fluid or fluid mixture belong to the group of light-hardening resins.

According to a further version of the present invention, the fluid or fluid mixture belong to the group of photopolymers.

It is intended that, in the apparatus 1, the type of irradiation means 16 may vary depending on the type of fluid or fluid mixture used.

Furthermore, the number, shape as well as the arrangement of the irradiation means 16 provided for in the apparatus 1 may vary from that illustrated by way of example in figure 2, without thereby exceeding the scope of protection of the present invention. The apparatus 1 may comprise at least one control unit 19 operationally associated with the at least one print module 4.

The control unit 19 is configured for controlling and checking the functioning of the at least one print head 14 and/or of the irradiation means 16.

The control unit 19 is also operationally associated with the means for moving 8 the support structure 7, for the purpose of controlling the mobilisation thereof and of the at least one print module 4 associated therewith.

The control unit 19, for its part, may be associated with a calculation device, for example a personal computer, a laptop, or a similar device not illustrated in the figures, from which it can receive the data regarding the configuration of the motif or decoration in relief or low relief to be created on the decoration means 3.

According to a further aspect of the present invention, the apparatus 1 may comprise at least one reservoir associated with at least one print module 4, not illustrated in the figures, for storing the fluid or fluid mixture to be delivered through the at least one print head 14.

If the apparatus 1 comprises two or more print modules 4, these may be connected to one and the same reservoir, or to respective separate reservoirs.

According to a further aspect of the present invention, for the realisation of at least one operative surface 5 of the decoration means 3, fluids or fluid mixtures that differ from one another may be used, thereby obtaining an operative surface 5 having nonhomogeneous mechanical properties.

In practice, it is possible to provide for the emission and subsequent hardening/solidification of a first fluid or of a first fluid mixture in a first, predefined portion of the operative surface 5 and the emission of a second fluid or of a second fluid mixture in a further portion of the operative surface 5, optionally in a successive layer 17, thereby obtaining an operative surface 5 having differentiated mechanical properties.

By way of example, it is possible to create an operative surface 5 having portions of greater mechanical resistance, e.g. to wear, and with differentiated pliability depending on the type of motif or decoration in relief or low relief to be created.

Moreover, in the case wherein fluids or fluid mixtures that differ from one another are used, one of the fluids or fluid mixtures may be of soluble type, for example soluble in water, so as to be able to create decorative motifs with undercuts, in that, after having served as a support for the other, insoluble layers of material, the layers of soluble material can be removed by washing with a solvent, for example of course, water.

As has already been said, a greater numbers of reservoirs than that described above may be present in the apparatus 1, without thereby exceeding the scope of protection of the present invention.

Furthermore, a single print module 4 may be associated with two or more reservoirs. In this way, the same print module 4 is capable of emitting different types of fluids or fluid mixtures.

According to a further aspect of the present invention, the apparatus 1 may comprise sensor means, indicated overall with the number 20, associated with the at least one print module 4.

The sensor means 20 are configured to reveal any obstacles in proximity to the at least one print module 4 with which they are associated, and to avoid that the latter might become damaged by hitting an obstacle.

As has been said, the motif or decoration can be created by forming successive layers 17 stacked up; see, for example, the schematic cross-sectional view illustrated in figure 3. Such an operative surface 5 may therefore have relief portions and depressions mutually contiguous to each other.

The sensor means 20 allow to check for the presence of any obstacles in proximity to the at least one print head 14 of the at least one print module 4, such as for example the portions of the surface of the said operative surface 5 that are in relief.

By way of example, the sensor means 20 may comprise proximity sensors, such as for example optoelectronic sensors, video sensors or the like, suitable for the purpose.

Figure 2 illustrates a possible positioning of the sensor means 20 in the at least one print module 4. However, other positions than that illustrated are possible, without thereby exceeding the scope of protection of the present invention.

Apparatus 1 allows creation of any motif or decoration in relief or low relief on the operative surface 5 of the decoration means 3 such as, for example, a punch, a covering for a punch for ceramic use, or at least a portion of the flexible type band 6 configurable as a ring, within the scope of an effective solution.

Moreover, the time required by the apparatus 1 for creating the motif or decoration in relief or low relief is reduced with respect to that of the solutions of conventional type. The single layers 17, which are deposited along at least a portion of the surface in external use of the decoration means 3, are obtained by depositing drops or micro-drops of print fluid or fluid mixture that are solidified/hardened under the influence of the aforementioned irradiation means 16.

According to one aspect of the present invention, the possibility of using fluids or fluid mixtures of different types allows creation of operative surfaces 5 for punch, for punch coverings, or for flexible type belt 6 associable with presser means, having differentiated mechanical characteristics, depending on specific production requirements.

For example, it is possible to create successive layers or specific portions of the operative surface 5 with different materials from one another.

Furthermore, by means of the apparatus 1 according to the present invention, operative surfaces 5 can be created for punch, punch coverings for ceramic use, or along at least a portion of a flexible type belt associable with presser means, of any dimension, without any limitation.

Below, by way of example, of the functioning of the apparatus 1 according to the present invention is disclosed.

To create an operative surface 5 along at least a portion of decoration means 3 for ceramic use, the procedure is to arrange on the basement 2, if provided, the decoration means 3, such as for example a punch without of the operative surface 5.

Using microprocessor means, for example a computer, the data relative to the operative surface 5 are transmitted to the control unit 19.

The control unit 19 the actuates the means for moving 8, moving the at least one print module 4 to above the decoration means 3 and controlling the delivery of at least one fluid or fluid mixture from the at least one print head 14 on to predefined portions of the decoration means 3.

The control unit 19 also commands the activation/ deactivation of the irradiation means 16 to cause the solidification or hardening of the fluid or fluid mixture deposited, thus forming at least one layer 17.

For the formation of layers 17 subsequent to those previously deposited, it is possible to proceed analogously, until the desired motif or decoration in relief or low relief is obtained on the surface in external use of the decoration means 3 or on at least a portion of this surface.

Such motif or decoration in relief or low relief may present portions in relief and depressions, as well as it may present substantially homogeneous portions or a combination thereof without any limitation.

The sensor means 20, if present, are associated with the control unit 19.

In such a case, the moving of the at least one print module 4 may be blocked to avoid the print head 14 from possibly hitting an obstacle present in the print area, which may correspond substantially to the exposed upper external surface of the decoration means 3.

Therefore, the sensor means 20 act as a safety element, preventing the print head 14 from hitting any raised portions of the motif/decoration created on the decoration means and becoming damaged as a result.

As has been said, according to the present invention, the at least one print module 4 can be moved along a substantially vertical direction D3.

Therefore, the apparatus 1 enables a substantially constant distance to be maintained between the exposed upper external surface of the decoration means 3 and the aperture of the at least one nozzle 15 from which the fluid or fluid mixture comes out, thus guaranteeing an optimal result in terms of the definition of the individual layers 17 and, consequently,of the overall operative surface 5 of the decorative means 3 thus obtained. The at least one print module 4 being movable in space, it can follow the profile of the operative surface 5 that is created even in the presence of raised portions and depressions.

The apparatus 1 according to the present invention therefore allows the creation of motifs/decorations in relief or low relief, of any complexity, on the operative surface 5 of the decoration means 3 such as, for example, a punch or a punch covering or at least a portion of a flexible belt 6 configurable as a ring and associable with presser means, within the scope of an effective solution with reduced overall prototype and production times and with low production costs.

## Claims

1. Apparatus for obtaining an operative surface (5) in the form of a motif or decoration on at least a portion of an exposed upper surface of a punch (3) or a punch covering for ceramic use or a flexible belt (6) configurable as a ring, whereby said a punch (3) or a punch covering for ceramic use (3) or a flexible belt (6) are adapted to create by pressure at least one impression complementary to said motif or decoration on a surface of ceramic products in the green state, said apparatus comprising a support structure (7), at least one print module (4) associated with said support structure (7) and provided with at least one fluid-jet print head (14), for the selective emission of a predefined amount of at least one fluid or fluid mixture on to at least a portion of said punch (3) or a punch covering for ceramic use or a flexible belt (6), said at least one print module (4) is adapted to create three-dimensional structures, by means of a process of additive type, on said operative surface (5), with reliefs or low reliefs obtained by means of the hardening of said at least one fluid or of a fluid mixture on at least a portion of said punch (3) or a punch covering for ceramic use or a flexible belt (6) configurable as a ring; wherein said apparatus comprises means (16, 18) for hardening said at least one fluid or said fluid mixture emitted by said at least one print head (14) to accelerate the hardening or solidification of said at least one fluid or said fluid mixture; wherein said means for hardening (16, 18) are associated with said at least one print head (14); wherein said hardening means comprise irradiation means (16) configured to emit radiations that accelerate the hardening or solidification of said at least one fluid or said fluid mixture and wherein said irradiation means (16) are positioned at a nozzle (15) for the emission of a print fluid or fluid mixture from said at least one print head (14); further comprising means for moving (8, 11, 12, 13) to determine the position and/or the reciprocal distance between said at least one print module (4) and said punch (3) or punch covering for ceramic use or flexible belt (6) configurable as a ring (3), when said punch (3) or punch covering for ceramic use or flexible belt (6) configurable as a ring (3) is treated by said at least one print module (4) wherein said means for moving (8) comprise raising means (13) associated with said at least one print module (4), for moving said at least one print module (4) along a vertical direction (D3), that is, a direction perpendicular to said operative surface (5).

2. Apparatus according to claim 1, wherein said means for moving (8) comprise first actuation means (11) for the relative moving of said at least one print module (4) with respect to said operative surface (5) along a first direction (D1).

3. Apparatus according to the preceding claim, wherein said means for moving (8) comprise second actuation means (12) for the relative moving of said at least one print module (4) with respect to said operative surface (5) along a second direction (D2) substantially orthogonal to said first direction (D1).

4. Apparatus according to claim 1, wherein said support structure (7) is configured as a portal and comprises at least one horizontal crossbar (10) slidably associated, at opposing sides, to vertical columns (9), said at least one print module (4) being associated with said horizontal crossbar (10).

5. Apparatus according to any one of the preceding claims, comprising sensor means (20), associated with said at least one print module (4), for the detection of obstacles which may interfere with the moving of said at least one print module (4).

6. Apparatus according to the preceding claim, wherein said sensor means (20) comprise proximity sensors, of the opto-electronic and/or mechanical or optical type.

7. Apparatus according to any one of the preceding claims, comprising at least one control unit (19) for the actuation of said means for moving (8), for the selective activation/deactivation of said at least one print head (14), the selective activation/ deactivation of said hardening means (16, 18).

8. Apparatus according to claim 1, wherein said fluid or said fluid mixture belongs to the group of light-hardening resins or photopolymers.

## Patentansprüche

1. Vorrichtung zur Herstellung einer Arbeitsoberfläche (5) in Form eines Motivs oder einer Dekoration auf mindestens einem Teil einer freiliegenden oberen Oberfläche eines Stempels (3) oder einer Stempelabdeckung für den keramischen Gebrauch oder eines flexiblen Bandes (6), das als Ring konfigurierbar ist, wodurch der Stempel (3) oder die Stempelabdeckung für den keramischen Gebrauch (3) oder das flexible Band (6) so beschaffen sind, dass sie durch Druck mindestens einen zu dem Motiv oder der Dekoration komplementären Abdruck auf einer Oberfläche keramischer Erzeugnisse im Rohzustand erzeugen, wobei die Vorrichtung eine Trägerstruktur (7), mindestens ein mit der Trägerstruktur (7) verbundenes und mit mindestens einem Fluidstrahl-Druckkopf (14) versehenes Druckmodul (4) umfasst, zur selektiven Abgabe einer vordefinierten Menge mindestens eines Fluids oder Fluidgemischs auf mindestens einen Teil des Stempels (3) oder die Stempelabdeckung für den keramischen Gebrauch oder das flexible Band (6), wobei das mindestens eine Druckmodul (4) geeignet ist, dreidimensionale Strukturen mittels eines additiven Verfahrens auf der Arbeitsoberfläche (5) zu erzeugen, mit Reliefs oder Flachreliefs, die durch das Aushärten des mindestens einen Fluids oder des Fluidgemischs auf mindestens einem Teil des Stempels (3) oder der Stempelabdeckung für den keramischen Gebrauch oder des flexiblen Bandes (6), das als Ring konfigurierbar ist, erhalten werden; wobei die Vorrichtung Mittel (16, 18) zum Härten des mindestens einen Fluids oder des Fluidgemischs umfasst, das von dem mindestens einen Druckkopf (14) abgegeben wird, um die Härtung oder Verfestigung des mindestens einen Fluids oder des Fluidgemischs zu beschleunigen; wobei die Mittel zum Härten (16, 18) mit dem mindestens einen Druckkopf (14) verbunden sind; wobei die Mittel zum Härten Bestrahlungsmittel (16) umfassen, die so konfiguriert sind, dass sie Strahlungen emittieren, die die Härtung oder Verfestigung des mindestens einen Fluids oder des Fluidgemischs beschleunigen, und wobei die Bestrahlungsmittel (16) an einer Düse (15) für die Emission eines Druckfluids oder Fluidgemischs von dem mindestens einen Druckkopf (14) positioniert sind; ferner umfassend Mittel zum Bewegen (8, 11, 12, 13), um die Position und/oder den gegenseitigen Abstand zwischen dem mindestens einen Druckmodul (4) und dem Stempel (3) oder der Stempelabdeckung für den keramischen Gebrauch oder dem flexiblen Band (6), das als Ring (3) konfigurierbar ist, zu bestimmen, wenn der Stempel (3) oder die Stempelabdeckung für den keramischen Gebrauch oder das flexible Band (6), das als Ring (3) konfigurierbar ist, von dem mindestens einen Druckmodul (4) bearbeitet wird, wobei die Mittel zum Bewegen (8) Hebemittel (13) umfassen, die mit dem mindestens einen Druckmodul (4) verbunden sind, um das mindestens eine Druckmodul (4) entlang einer vertikalen Richtung (D3) zu bewegen, d.h. einer Richtung senkrecht zu der Arbeitsoberfläche (5).

2. Vorrichtung nach Anspruch 1, wobei die Mittel zum Bewegen (8) erste Betätigungsmittel (11) zum relativen Bewegen des mindestens einen Druckmoduls (4) in Bezug auf die Arbeitsoberfläche (5) entlang einer ersten Richtung (D1) umfassen.

3. Vorrichtung nach dem vorhergehenden Anspruch, wobei die Mittel zum Bewegen (8) zweite Betätigungsmittel (12) zum relativen Bewegen des mindestens einen Druckmoduls (4) in Bezug auf die Arbeitsoberfläche (5) entlang einer zweiten Richtung (D2) im Wesentlichen orthogonal zu der ersten Richtung (D1) umfassen.

4. Vorrichtung nach Anspruch 1, wobei die Trägerstruktur (7) als Portal ausgebildet ist und mindestens eine horizontale Querstange (10) umfasst, die an gegenüberliegenden Seiten mit vertikalen Säulen (9) verschiebbar verbunden ist, wobei das mindestens eine Druckmodul (4) mit der horizontalen Querstange (10) verbunden ist.

5. Vorrichtung nach einem der vorhergehenden Ansprüche, umfassend Sensormittel (20), die mit dem mindestens einen Druckmodul (4) verbunden sind, um Hindernisse zu erfassen, die die Bewegung des mindestens einen Druckmoduls (4) stören können.

6. Vorrichtung nach dem vorhergehenden Anspruch, wobei die Sensormittel (20) Näherungssensoren vom optoelektronischen und/oder mechanischen oder optischen Typ umfassen.

7. Vorrichtung nach einem der vorhergehenden Ansprüche, umfassend mindestens eine Steuereinheit (19) zur Betätigung der Mittel zum Bewegen (8), zur selektiven Aktivierung/Deaktivierung des mindestens einen Druckkopfes (14), zur selektiven Aktivierung/Deaktivierung der Mittel zum Härten (16, 18).

8. Vorrichtung nach Anspruch 1, wobei das Fluid oder das Fluidgemisch zur Gruppe der lichthärtenden Harze oder Photopolymere gehört.

## Revendications

1. Appareil pour l'obtention d'une surface opératoire (5) sous forme de motif ou de décoration sur au moins une partie d'une surface supérieure exposée d'un poinçon (3) ou d'un revêtement de poinçon à usage céramique ou d'une ceinture flexible (6) configurable sous la forme d'un anneau, ledit poinçon (3) ou revêtement de poinçon (3) à usage céramique ou ceinture flexible (6) étant adaptés pour créer par pression au moins une impression complémentaire audit motif ou décoration sur une surface de produits céramiques à l'état cru, ledit appareil comprenant une structure de support (7), au moins un module d'impression (4) associé à ladite structure de support (7) et pourvu d'au moins une tête d'impression (14) à jet de fluide, pour l'émission sélective d'une quantité prédéfinie d'au moins un fluide ou mélange de fluides sur au moins une partie dudit poinçon (3) ou revêtement de poinçon à usage céramique ou une ceinture flexible (6), ledit au moins un module d'impression (4) est adapté pour créer des structures tridimensionnelles, au moyen d'un procédé de type additif, sur ladite surface opératoire (5), avec des reliefs ou bas-reliefs obtenus au moyen du durcissement dudit au moins un fluide ou mélange de fluides sur au moins une partie dudit poinçon (3) ou revêtement de poinçon à usage céramique ou ceinture flexible (6) configurable en anneau ; ledit appareil comprend des moyens (16, 18) pour durcir ledit au moins un fluide ou mélange de fluides émis par ladite au moins une tête d'impression (14) pour accélérer le durcissement ou la solidification dudit au moins un fluide ou dudit mélange de fluides ; lesdits moyens pour durcir (16, 18) sont associés à ladite au moins une tête d'impression (14) ; lesdits moyens pour durcir comprennent des moyens d'irradiation (16) configurés pour émettre des rayonnements qui accélèrent le durcissement ou la solidification dudit au moins un fluide ou mélange de fluides et lesdits moyens d'irradiation (16) sont positionnés au niveau d'une buse (15) pour l'émission d'un fluide ou d'un mélange fluide d'impression provenant de ladite au moins une tête d'impression (14) ; comprenant en outre des moyens de déplacement (8, 11, 12, 13) pour déterminer la position et/ou la distance réciproque entre ledit au moins un module d'impression (4) et ledit poinçon (3) ou revêtement de poinçon à usage céramique ou ceinture flexible (6) configurable en anneau (3), lorsque ledit poinçon (3) ou revêtement de poinçon à usage céramique ou ceinture flexible (6) configurable en anneau (3) est traité par ledit au moins un module d'impression (4), lesdits moyens de déplacement (8) comprenant des moyens de soulèvement (13) associés audit au moins un module d'impression (4), pour déplacer ledit au moins un module d'impression (4) selon une direction verticale (D3), c'est-à-dire une direction perpendiculaire à ladite surface opératoire (5).

2. Appareil selon la revendication 1, dans lequel lesdits moyens de déplacement (8) comprennent des premiers moyens d'actionnement (11) pour le déplacement relatif dudit au moins un module d'impression (4) par rapport à ladite surface opératoire (5) selon une première direction (D1).

3. Appareil selon la revendication précédente, dans lequel lesdits moyens de déplacement (8) comprennent des deuxièmes moyens d'actionnement (12) pour le déplacement relatif dudit au moins un module d'impression (4) par rapport à ladite surface opératoire (5) le long d'une deuxième direction (D2) sensiblement orthogonale à ladite première direction (D1).

4. Appareil selon la revendication 1, dans lequel ladite structure de support (7) est configurée sous la forme d'un portique et comprend au moins une traverse horizontale (10) associée de manière coulissante, au niveau de côtés opposés, à des colonnes verticales (9), ledit au moins un module d'impression (4) étant associé à ladite traverse horizontale (10).

5. Appareil selon l'une quelconque des revendications précédentes, comprenant des moyens (20) formant capteurs, associés audit au moins un module d'impression (4), pour la détection d'obstacles susceptibles de gêner le déplacement dudit au moins un module d'impression (4).

6. Appareil selon la revendication précédente, dans lequel lesdits moyens (20) formant capteurs comprennent des capteurs de proximité, de type optoélectronique et/ou mécanique ou optique.

7. Appareil selon l'une quelconque des revendications précédentes, comprenant au moins une unité de commande (19) pour l'actionnement desdits moyens de déplacement (8), pour l'activation/désactivation sélective de ladite au moins une tête d'impression (14), l'activation/désactivation sélective desdits moyens pour durcir (16, 18).

8. Appareil selon la revendication 1, dans lequel ledit fluide ou ledit mélange de fluides appartient au groupe des résines ou photopolymères photodurcissables.
